# EUROPÄISCHE PATENTSCHRIFT

(11) **EP 3 984 707 B1**
(45) Veröffentlichungstag und Bekanntmachung des Hinweises auf die Patenterteilung: **26.07.2023**
(21) Anmeldenummer: 21196736.9
(22) Anmeldetag: 15.09.2021
(51) Int. Cl.: B25J 5/02, B23Q 3/00, B25B 1/18, B25J 9/00

(54) **VORRICHTUNG ZUM BE- UND ENTLADEN SOWIE ZUM BEDIENEN EINES MASCHINENSCHRAUBSTOCKS**
DEVICE FOR LOADING AND UNLOADING AND FOR OPERATING A MACHINE VISE
DISPOSITIF DE CHARGEMENT ET DE DÉCHARGEMENT, AINSI QUE DE FONCTIONNEMENT D'UN ÉTAU POUR MACHINES

(30) Priorität: 15.10.2020 DE 102020127201
(43) Veröffentlichungstag der Anmeldung: 20.04.2022
(73) Patentinhaber: WST Präzisionstechnik GmbH, 79843 Löffingen (DE)
(72) Erfinder: MARTIN, Rudolf, 79843 Löffingen (DE); PFEIFER, Markus, 79843 Löffingen (DE)
(74) Vertreter: Patent- und Rechtsanwälte Behrmann Wagner PartG mbB

(56) Entgegenhaltungen:
- EP-A2- 3 715 047
- WO-A1-2019/175024
- DE-A1-102018 008 428
- DE-U1- 9 312 897
- DE-U1-202019 102 742
- KR-B1- 102 123 695

## Beschreibung

Die vorliegende Erfindung betrifft eine Vorrichtung zum Be- und Entladen sowie zum Bedienen eines Maschinenschraubstocks. Ferner betrifft die vorliegende Erfindung ein System umfassend eine vorgenannte Vorrichtung sowie eine Werkzeugmaschine mit einem Maschinenschraubstock.

Bei der Fertigung von Bauteilen, insbesondere bei der Fertigung von Metallbauteilen, aus Werkstückrohlingen ist für die tatsächliche Bearbeitung des Werkstückrohlings oder des Halbzeugs in der Vergangenheit bereits eine weitreichende Automatisierung erreicht worden. So sind unter anderem Werkzeugmaschinen, beispielsweise Fräs- und/oder Drehmaschinen bekannt, die aus Werkstückrohlingen, beispielsweise quaderförmigen oder würfelförmigen Rohlingen komplexe Bauteile weitestgehend vollautomatisch herstellen, was nicht zuletzt auch durch Werkzeugmaschinen mit wechselbaren Werkzeugen in Verbindung mit der CAD-CAM-Technologie auf der Grundlage digitaler Dateien oder digitaler Modelle der Bauteile ermöglicht wird. Der Stand der Technik lässt sich wie folgt zusammenfassen: DE202019102742U und DE9312897U beziehen sich auf Greifer zur Beschickung einer Bearbeitungsmaschine, welche auf einer linear beweglichen Basis montiert sind.

DE102018008428 und WO 2019/175024 bezieht sich auf Greifer, welche am Ende des Greifarms eine Spindel zum Bedienen einer Spannvorrichtung aufweisen.

KR102123695 und EP3715047 bezieht sich auf mobile Roboter, welche an ihrer Basis Elemente zur Interaktion mit anderen Maschinen aufweisen.

In der Großserienfertigung sind zudem bereits Fertigungsstraßen bekannt, bei denen der Rohling oder das Halbzeug automatisch zwischen unterschiedlichen Bearbeitungsstationen oder zwischen unterschiedlichen Werkzeugeinheiten transportiert wird.

In diesem Zusammenhang ist beispielsweise die Lehre der WO 2019/175042 A1 bekannt, in der eine Werkstückhandhabungseinheit, beispielsweise eine Mehrachsrobotereinheit, einen Schraubstock aufweisen kann, der ein Werkstück oder einen Rohling aufnimmt und dann zu einem Bearbeitungswerkzeug oder unterschiedlichen Bearbeitungswerkzeugen transportiert.

Dies führt zwar zu einer Automatisierung, hat jedoch den Nachteil, dass mit der bekannten Vorrichtung nicht oder zumindest nicht ohne weiteres Rohlinge mit unterschiedlichen Abmessungen oder aus unterschiedlichen Werkstoffen ohne entsprechende Umrüstung der Vorrichtung oder Anlage verarbeitet werden können.

Ein weiterer Nachteil der bekannten Ansätze zur automatischen Handhabung von Werkstücken, insbesondere Rohlingen, der oben genannten Art besteht darin, dass diese Ansätze nicht oder unter großem Aufwand konstruktiver und finanzieller Natur in bestehende Fertigungsanlagen, beispielsweise in bestehende Werkzeugmaschinen, bevorzugt Fräs- und Drehmaschinen, integriert werden können.

Daraus folgt die Problematik, dass Fertigungseinrichtungen oder Fertigungsunternehmen bisher die Wahl hatten entweder die bisher vorhandenen Werkzeugmaschinen ohne Automatisierung der Beladung und Entladung zu betreiben. In diesem Fall ist dann ein recht hoher personeller Einsatz notwendig, um die jeweiligen Werkstücke oder Rohlinge in die Werkzeugmaschine einzulegen, dort korrekt und sachgerecht in einen Maschinenschraubstock einzuspannen und anschließend nach der entsprechenden Bearbeitung durch die Werkzeugmaschine wieder zu entnehmen.

Alternativ bestand bisher die Möglichkeit auch die Zufuhr und Entnahme bzw. das Be- und Entladen sowie das Einspannen der Werkstücke zu automatisieren, was jedoch ein hohen finanziellen Investitionsbedarf verursachte und aufgrund der verhältnismäßig geringen Flexibilität auch nur für die Produktion von Bauteilen ab einer gewissen Stückzahl überhaupt wirtschaftlich sinnvoll war.

Ausgehend von diesem Stand der Technik ist es die Aufgabe der vorliegenden Erfindung eine Vorrichtung und ein System vorzuschlagen, welches ein einfaches, flexibles und automatisches Be- und Entladen sowie Bedienen eines Maschinenschraubstocks einer Werkzeugmaschine ermöglicht, insbesondere ohne dazu wesentliche konstruktive Änderungen oder Anpassungen an der besagten Werkzeugmaschine vornehmen zu müssen.

Diese Aufgabe wird mit einer Vorrichtung mit den Merkmalen des Anspruchs 1 gelöst. Weiterhin wird die Aufgabe durch ein System mit den Merkmalen des Anspruchs 13 gelöst. Ferner wird die Aufgabe durch ein nachfolgend beschriebenes Verfahren gelöst, welches nicht beansprucht ist.

Vorteilhafte Ausführungsformen sind Gegenstand der Unteransprüche sowie der Beschreibung.

Die erfindungsgemäße Vorrichtung zum Be- und Entladen sowie zum Bedienen eines Maschinenschraubstocks einer Werkzeugmaschine umfasst eine entlang einer Längsrichtung oder Längsachse verschiebbar gelagerte Positioniereinrichtung. Weiterhin umfasst die Vorrichtung eine in Längsrichtung an einem Ende der Positioniereinrichtung und zusammen mit der Positioniereinrichtung bewegbare Kupplungseinheit zur lösbaren mechanischen Kupplung mit einem Maschinenschraubstock der Werkzeugmaschine und zur Bedienung, insbesondere Öffnen und Schließen, des Maschinenschraubstocks. Weiterhin weist die Vorrichtung eine in Längsrichtung hinter der Kupplungseinheit angeordnete und ebenfalls zusammen mit der Positioniereinrichtung bewegbare Werkstückhandhabungseinheit, insbesondere eine Mehrachsrobotereinheit, auf.

Der Grundgedanke der Erfindung besteht also darin, eine Vorrichtung vorzuschlagen, die lösbar an ein Maschinenschraubstock einer Werkzeugmaschine gekoppelt werden kann und im gekoppelten Zustand den Maschinenschraubstock bedienen, insbesondere öffnen, schließen und spannen kann, wobei zudem im gekoppelten Zustand der Kupplungseinheit eine Werkstückhandhabungseinheit so an die Werkzeugmaschine und deren Maschinenschraubstock herangefahren oder herangeführt wird, dass eine Beladung und Entladung, also ein Zuführen von Rohlingen und eine Entnahme von bearbeiteten Werkstücken oder Bauteilen durch die Werkstückhandhabungseinheit automatisiert werden kann.

Dadurch das die Vorrichtung nicht nur die Rohlinge zuführt oder die Werkzeugmaschine bestückt oder belädt, sondern auch den Maschinenschraubstock bedient oder steuert, können Werkstücke oder Rohlinge mit unterschiedlichen quader- oder würfelförmigen Geometrien sowie aus unterschiedlichsten Werkstoffen flexibel und ohne Umrüstung der Vorrichtung oder der Werkzeugmaschine bearbeitet oder verarbeitet werden. Lediglich die maximale Öffnungsweite der Klemmbacken des Maschinenschraubstocks sowie die sonstigen Abmessungen des Maschinenschraubstocks oder sonstige Begrenzungen seitens der Werkzeugmaschine limitieren die Abmessungen der zu verarbeitenden Rohlinge oder Werkstücke.

Ein Vorteil der erfindungsgemäßen Vorrichtung liegt darin, dass zusammen mit dem Werkstück von der Werkstückhandhabungseinheit keine Klemmeinrichtung oder Schraubstockeinheit mitbewegt werden muss, sondern lediglich das sichere Greifen und Halten des Werkstücks ermöglicht werden muss. Dadurch können auf Seiten der Werkstückhandhabungseinheit, beispielsweise der Mehrachsrobotereinheit, zu bewegende und zu beschleunigende Gewichte/Massen eingespart werden. Dies führt wiederum dazu, dass eine sehr große Bandbreite an Werkstücken, insbesondere auch größere und schwerere Werkstücke, von der Werkstückhandhabungseinheit gehandhabt und bewegt werden können. Andererseits führt dies auch dazu, dass für vergleichbar große und schwere Werkstücke durch die Einsparung von zu bewegenden und zu beschleunigenden Massen verhältnismäßig klein und kompakt bemessene Werkstückhandhabungseinheiten, beispielsweise Mehrachsrobotereinheiten, zum Einsatz kommen können. Dies erlaubt in vorteilhafter Weise den Einsatz in Verbindung mit kompakten Werkzeugmaschinen, zu denen ein Zugang mit massiveren oder voluminöseren Werkstückbedienungseinheiten nicht möglich wäre oder zumindest nicht möglich wäre ohne wesentliche konstruktive Veränderung der Werkzeugmaschine.

Die erfindungsgemäße Vorrichtung ermöglicht es also reversibel und damit - falls gewünscht - auch zeitlich begrenzt, das Beladen, Entladen und Einspannen von Werkstücken für bestehende Werkzeugmaschinen nachträglich und zu automatisieren. Denn die Werkzeugmaschine an sich kann weitestgehend oder vollständig unverändert weiterbetrieben werden. Außerdem kann je nach Kopplungszustand der Kupplungseinheit sowie je nach Zustand der Positioniereinrichtung, die Werkzeugmaschine auch weiterhin manuell beladen und entladen sowie Werkstücke eingespannt werden. Es kann also beispielsweise in einem Mehrschichtfertigungsprozess oder in einem Mehrschichtproduktionsprozess unter Zuhilfenahme der erfindungsgemäßen Vorrichtung erreicht werden, dass ein und dieselbe Werkzeugmaschine zeitweise manuell bedient, insbesondere manuell beladen und entladen sowie Werkstücke in den Maschinenschraubstock eingespannt werden, als auch zeitweise oder temporär, beispielsweise im Rahmen einer Nachtschicht, im Anschluss an eine Verstellung der Positioniereinrichtung, die jetzt zu einer Kupplung der Kupplungseinheit an der Werkzeugmaschine führt, dass Be- und Entladen sowie das Bedienen des Maschinenschraubstocks automatisch vorgenommen wird.

Die Positioniereinrichtung kann beispielsweise in Längsrichtung verschiebbaren Stelltisch realisiert werden, an dem sowohl die Kupplungseinheit als auch die Werkstückhandhabungseinheit angeordnet und festgelegt sind.

Die Werkstückhandhabungseinheit kann beispielsweise als Mehrachsrobotereinheit, beispielsweise als Sechs-Achs-Roboter ausgeführt sein. Bevorzugt kann die Verstellung der Positioniereinrichtung, der Kupplungseinheit sowie der Werkstückhandhabungseinheit elektronisch und/oder pneumatisch, bevorzugt unter Verwendung von Druckluft, erreicht werden. Bevorzugt ergibt sich aus der Bewegung der Positioniereinrichtung entlang deren Längsachse und einem Roboter mir sechs Achsen als Werkstückhandhabungseinheit eine Vorrichtung mit sieben oder 6+1 Bewegungsachsen. Im Vorgriff auf die nachfolgende Offenbarung kann auch von acht oder 6+2 Achsen ausgegangen werden, wenn eine Rotationsachse zum rotatorischen Antrieb der Kupplungseinheit, beispielsweise eines Kupplungsstücks, miteingerechnet werden. Mit Ausnahme der Längsachse selbst, sind alle anderen Achsen, die zur Bedienung und Beladung des Maschinenschraubstocks benutzt werden dabei durch die Bewegung der Positioniereinrichtung entlang der Längsachse parallel zu dieser verstellbar, da sowohl die Werkstückhandhabungseinheit als auch die Kupplungseinheit zusammen mit der Positioniereinrichtung bewegt werden oder bewegbar sind.

Die Anordnung der Werkstückhandhabungseinheit hinter der Positioniereinrichtung soll in der vorliegenden Beschreibung so verstanden werden, dass zumindest ein Teil der Kupplungseinheit bei einer Verstellung oder Verschiebung der Positioniereinrichtung auf die Werkzeugmaschine zu zuerst mit der Werkzeugmaschine in Kontakt kommt. Es kann also beispielsweise auch vorgesehen sein, dass die Werkstückhandhabungseinheit oberhalb der Kupplungseinheit und etwa auf gleicher Höhe oder in Längsrichtung zumindest teilweise überlappend angeordnet ist, solange sichergestellt ist, dass die Kupplungseinheit ohne Behinderung durch die Werkstückhandhabungseinheit eine Kupplung zum Maschinenschraubstock herstellen kann.

Gemäß einer vorteilhaften Ausführungsform kann vorgesehen sein, dass die Kupplungseinheit ein in Längsrichtung gegenüber der Positioniereinrichtung bewegliches, bevorzugt gefedertes Ausgleichssystem und ein mit einem Antriebsmotor rotatorisch angetriebenes zusammen mit der Positioniereinrichtung bewegliches Kupplungsstück zur Kupplung mit einem Antriebszapfen oder einer Antriebsspindel des Maschinenschraubstocks aufweist.

Dadurch kann in vorteilhafter Weise erreicht werden, dass beim Verfahren der Positioniereinrichtung zunächst das Ausgleichssystem an dem Maschinenschraubstock zur Anlage kommt und bei einem weiteren Verschieben oder Bewegen der Positioniereinrichtung das Ausgleichssystem zunächst um einen gewissen Federweg gegenüber der Positioniereinrichtung und damit entgegen der Bewegungsrichtung der Positioniereinrichtung eintaucht oder elastisch verschoben wird, bis oder bevor das Kupplungsstück, beispielsweise in Form eines Innensechskants, mit einer entsprechenden Antriebsspindel oder Antriebszapfen, beispielsweise in der Form eines gebräuchlichen Außensechskants, des Maschinenschraubstocks in Eingriff gebracht wird, wodurch dann die mechanische Kupplung zwischen der Vorrichtung und dem Maschinenschraubstock hergestellt wird. Das Ausgleichssystem kann dabei nicht nur als mechanischer Schutz und zur Führung des Kupplungsstücks dienen, der Zustand des Ausgleichssystems, beispielsweise der Federweg oder die Eintauchstrecke des gefederten Ausgleichssystems kann auch wichtige Informationen über den Kupplungszustand liefern und somit eine sichere Kupplung oder ein sicheres und erfolgreiches Bereitstellen der Kupplung überwachbar machen und insgesamt vereinfachen. So kann beispielsweise vorgegeben sein oder vorgegeben werden, dass erst ab einem bestimmten Eintauchweg des gefederten Ausgleichssystems von einer vollständigen und sicheren Kupplung ausgegangen werden kann. Um diesen Eintauchweg zu erreichen, können zur Kupplung verschiedene Maßnahmen vorgesehen werden. Beispielsweise kann eine langsame und geringfügige Rotation oder Verstellung des Kupplungsstücks verursacht werden, wenn der Eintauchweg des Ausgleichssystems darauf schließen lässt, dass bereits die Antriebsspindel oder der Antriebszapfen des Maschinenschraubstocks an einem distalen Ende des Kupplungsstücks anliegt, aber das Kupplungsstück den Antriebszapfen oder die Antriebsspindel noch nicht umgreift oder umschließt.

Außerdem kann das gefederte Ausgleichssystem als Schutz des Kupplungsstücks im entkoppelten oder ungekoppelten Zustand dienen, da das Ausgleichssystem vorteilhaft so konstruiert und dimensioniert sein kann, dass erst ab einem gewissen Eintauchweg oder einer entsprechenden Verfahrstrecke gegenüber der Positioniereinrichtung das Kupplungsstück aus einer Ausnehmung des Ausgleichssystems herausragt.

Weiterhin kann vorteilhaft vorgesehen sein, dass die Werkstückhandhabungseinheit so ausgebildet und angeordnet ist, dass bei einer erfolgten Kupplung der Kupplungseinheit an einem Maschinenschraubstock ein Werkstückhalter der Werkstückhandhabungseinheit den Maschinenschraubstock erreichen kann. Dadurch das der Maschinenschraubstock erreicht werden kann, wird ermöglicht, dass vom Werkstückhalter gehaltene Werkstück in den Maschinenschraubstock eingelegt und aus diesem zu entnommen werden können. In diesem Zusammenhang zeigt sich auch die vorteilhafte Wirkung einer zusammen mit der Positioniereinrichtung bewegbaren Werkstückhandhabungseinheit. Denn dadurch, dass die Werkstückhandhabungseinheit zusammen mit der Kupplungseinheit im Rahmen der Herstellung der Kupplung zur Werkzeugmaschine an die Werkzeugmaschine heranbewegt wird, kann die Werkzeughandhabungseinheit verhältnismäßig klein oder kompakt ausfallen und trotzdem oder gleichzeitig in der Lage sein die notwendigen Distanzen zu überbrücken, um die Werkstücke in den Maschinenschraubstock einzulegen und aus diesem zu entnehmen.

Gemäß einer weiteren vorteilhaften Ausführungsform kann vorgesehen sein, dass die Vorrichtung über ein gemeinsames Steuerungssystem für die Werkstückhandhabungseinheit und die Kupplungseinheit, und bevorzugt die Positioniereinrichtung verfügt.

Daraus erwächst der Vorteil, dass die Vorrichtung in einer aufeinander abgestimmten Art und Weise das Werkstück oder den Rohling in die Werkzeugmaschine, insbesondere in den Maschinenschraubstock einsetzen oder einladen, dort vorspannen und/oder einspannen sowie entnehmen kann. Denn die Steuerungsdaten oder Steuerungsbefehle, die von dem Steuerungssystem genutzt oder ausgeführt werden, um ein Werkstück oder Rohling eines bestimmten Materials sowie mit bestimmten Abmessungen aufzunehmen und zum Maschinenschraubstock zu befördern können, dann gleichzeitig auch dazu genutzt werden, über die Kupplungseinheit, insbesondere über das rotativ angetriebene Kupplungsstück, den Maschinenschraubstock entsprechend zu bedienen, insbesondere zu öffnen und/oder zu schließen.

Gemäß einer weiteren, besonders bevorzugten Ausgestaltung der Vorrichtung kann vorgesehen sein, dass das Steuersystem mittels zumindest eines Sensors der Kupplungseinheit, insbesondere des Antriebsmotors des Kupplungsstücks und/oder des Ausgleichssystems, den Kopplungszustand und/oder den Zustand des Maschinenschraubstocks erfassen kann. Als Sensoren können dabei grundsätzlich unterschiedliche Bauteile und Messverfahren zum Einsatz kommen. In einer ersten, besonders vorteilhaften Ausgestaltung kann vorgesehen sein, dass die Stromaufnahme und/oder die Spannungsaufnahme des Antriebsmotors des Kupplungsstücks überwacht oder erfasst werden und aus diesen Betriebsdaten oder Betriebszuständen ein Rückschluss auf den Zustand des Maschinenschraubstocks, beispielsweise ein Rückschluss auf die Spannkraft der Spannbacken auf ein Werkstück gezogen werden. Für einen oder mehrere Sensoren des Ausgleichssystems kommen ebenfalls grundsätzlich verschiedene Möglichkeiten in Frage. Hierbei ist, wie oben bereits angedeutet oder ausgeführt, unter anderem interessant ob und inwieweit das Ausgleichssystem gegenüber einer Ausgangsposition oder Ruheposition gegenüber der Positioniereinrichtung bewegt oder verstellt wurde. Dadurch aber auch durch andere Eigenschaften und Zustände des Ausgleichssystems sowie des Kupplungsstücks, kann der Zustand der Kopplung sowie der Zustand des Maschinenschraubstocks, insbesondere ein Einspannzustand eines Werkstücks, mittelbar erfasst werden oder auf diesem geschlossen werden.

In einer weiteren, bevorzugten Ausführungsform der Vorrichtung kann vorgesehen sein, dass das Steuerungssystem dazu eingerichtet ist ein Werkstück mittels der Werkstückhandhabungseinheit an einen gekoppelten Maschinenschraubstock zu übergeben und zu entnehmen und ferner dazu eingerichtet ist den Maschinenschraubstock öffnen, zu schließen und beim Schließen eine gewünschte, werkstückabhängige Einspannung des Werkstücks herzustellen und gegebenenfalls aufrechtzuerhalten. Neben einer gewünschten werkstückabhängigen Einspannung kann das Steuerungssystem auch dazu eingerichtet sein eine werkstückabhängige Vorspannung des Maschinenschraubstocks herzustellen oder zu bewirken. Dadurch wird die Automatisierung der Werkzeugmaschine im Hinblick auf das Beladen und Entladen einschließlich der Bedienung oder Betätigung des Maschinenschraubstocks sichergestellt.

Weiterhin kann vorteilhaft vorgesehen sein, dass die Vorrichtung ein gemeinsames Gehäuse aufweist, welches in einem eingefahrenen oder zurück gezogenen Zustand der Positioniereinrichtung die Positioniereinrichtung samt Kupplungseinheit und Werkstückhandhabungseinheit umschließt. Dadurch kann in vorteilhafter Weise eine besonders kompakte Ausführung der Vorrichtung realisiert werden, insbesondere in einem Zustand, in dem keine Kopplung oder Kupplung mit einer Werkzeugmaschine, insbesondere einem Maschinenschraubstock hergestellt ist oder bereitgestellt wird. Dies wiederum ermöglicht einen guten und einfachen Zugang zu der Werkzeugmaschine in einem nicht gekoppelten oder nicht gekuppelten Zustand der Vorrichtung. Außerdem wird durch das gemeinsame Gehäuse die Vorrichtung als Modul oder Moduleinheit bereitgestellt, die zusätzlich zu den oben genannten Vorteilen einen variablen Einsatz der Vorrichtung, beispielsweise an unterschiedlichen Werkzeugmaschinen grundsätzlich möglich macht.

Gemäß einer weiteren vorteilhaften Ausführungsform der Vorrichtung kann vorgesehen sein, dass das Gehäuse ein Werkstücklager umfasst oder eine Kupplungseinrichtung für ein, insbesondere externes, Werkstücklager oder eine Werkstückzuführeinrichtung aufweist. Bei einem internen, im Gehäuse angeordneten Werkstücklager kann die automatisierte Bedienung des Maschinenschraubstocks sowie das Zuführen und Entnehmen, also das Be- und Entladen des Maschinenschraubstocks weiter vorangetrieben werden. Um jedoch die kompakten Abmessungen der Vorrichtung, insbesondere des Gehäuses, nicht über Gebühr auszudehnen, kann nur ein begrenztes Werkstücklager innerhalb des Gehäuses realisiert werden. Für den Fall, dass die Vorrichtung über längere Zeiträume, beispielsweise über mehrere Stunden, mehrere Tage oder noch länger ein automatisiertes Be- und Entladen der Werkzeugmaschine, insbesondere des Maschinenschraubstocks und Einspannen der Werkstücke durchführen soll, kann es deshalb vorteilhaft sein ein externes Werkstücklager an dem Gehäuse anzukoppeln oder eine Werkstückzuführeinrichtung an dem Gehäuse anzukoppeln. Dazu weist das Gehäuse in einer vorteilhaften Ausführungsform entsprechende Kopplungseinrichtungen auf.

In einer weiteren, bevorzugten Ausführungsvariante der Vorrichtung kann vorgesehen sein, dass das Gehäuse bodenseitig ein Rollensystem mit einer Nullpunktfixierungseinrichtung aufweist. Dadurch wird einerseits der Vorteil erreicht, dass die Vorrichtung variabel und mobil mit unterschiedlichen Werkzeugmaschinen zum Einsatz kommen kann, also mit unterschiedlichen Werkzeugmaschinen gekoppelt werden kann, um dann den Maschinenschraubstock zu bedienen sowie zu beladen und entladen. Um das Einrichten, Justieren und in Betrieb nehmen der Vorrichtung an der jeweiligen Werkzeugmaschine möglichst schnell und unkompliziert durchzuführen, ist es zudem vorteilhaft, wenn zusätzlich zu einem Rollensystem des Gehäuses der Vorrichtung eine Nullpunktfixierungseinrichtung vorgesehen ist, die im Zusammenwirken mit entsprechenden Hilfsmitteln, beispielsweise Schienen, Winkel od. dgl., die am Boden vor der Werkzeugmaschine angeordnet sein können, eine schnelle und wohldefinierte Anordnung und Fixierung der Vorrichtung im Umfeld, insbesondere vor einer Werkzeugmaschine erlauben.

Gemäß einer weiteren besonders vorteilhaften Ausgestaltung der Vorrichtung kann zudem vorgesehen sein, dass das Gehäuse alle Betriebs- und Steuereinrichtungen aufnimmt, die zum Betrieb der Vorrichtung notwendig sind, sodass zum Betrieb der Vorrichtung nur eine elektrische Versorgung und/oder eine Druckluftversorgung und/oder eine Kommunikationsschnittstelle bereitgestellt werden muss. Dies bedeutet mit anderen Worten ausgedrückt, dass beispielsweise alle notwendigen Komponenten zum Betrieb der Werkstückhandhabungseinheit, zum Betrieb der Positioniereinrichtung, zum Betrieb und Antrieb der Kupplungseinheit in dem Gehäuse angeordnet oder im Gehäuse verbaut sind und lediglich die notwendige Antriebsenergie in Form von elektrischer Energie oder in Form von Druckluft von Extern der Vorrichtung oder dem Gehäuse zugeführt werden muss. Weiterhin ist es für einen möglichst autarken und damit mobilen Einsatz oder Betrieb der Vorrichtung sinnvoll und dementsprechend vorteilhaft, wenn über eine Kommunikationsschnittstelle Daten betreffend die Handhabung von Werkstücken an die Vorrichtung übermittelt werden können. Als Kommunikationsschnittstelle kommen sowohl kabelgebundene als auch kabellose Technologien infrage.

In einer weiteren, besonders vorteilhaften Ausführungsform der Vorrichtung kann vorgesehen sein, dass das Gehäuse eine Grundfläche zwischen 0,8 m² und 1,5 m^{2,} bevorzugt zwischen 1,0 m² und 1,2 m² aufweist. Dadurch wird in vorteilhafter Weise erreicht, dass in einer Fertigungs- oder Produktionsumgebung, die mit bekannten und gattungsgemäßen Werkzeugmaschinen ausgestattet oder ausgerüstet ist, selbst bei einem äußerst geringen freien verfügbaren Raum in der Umgebung, insbesondere vor der Werkzeugmaschine, die erfindungsgemäße Vorrichtung zum Einsatz kommen kann. Weiterhin lassen sich durch den geringen Platzverbrauch der erfindungsgemäßen Vorrichtung diese in Zeiten, in denen die besagten Werkzeugmaschinen doch manuell, händisch oder vom Bedienpersonal bedient werden soll, leicht verstauen oder entfernen, ohne dass dazu signifikante Mengen an Lagerfläche oder Abstellfläche bereitgestellt werden müssen, selbst wenn mehrere entsprechende Vorrichtungen gelagert oder vorgehalten werden müssen.

Besonders bevorzugt kann vorgesehen sein, dass das Gehäuse eine Höhe zwischen 1,8 m und 2,2 m, bevorzugt zwischen 1,9 m und 2,1 m aufweist. Dadurch wird in vorteilhafter Weise genügend Platz oder Volumen bereitgestellt, um neben der Positioniereinrichtung, der Werkstückhandhabungseinheit, der Kupplungseinheit und ggf. den dazugehörigen Betriebs- und Steuerkomponenten auch ein verhältnismäßig großes Werkstücklager im Gehäuse anzuordnen und gleichzeitig zu ermöglichen, dass außerhalb des Gebrauchs oder des Betriebs der Vorrichtung die Positioniereinheit aus einem ausgefahrenen Zustand in einen eingefahrenen oder zurück gezogenen Zustand überführt werden kann, in dem dann alle Komponenten der Vorrichtung innerhalb des Gehäuses angeordnet sind und somit von der Vorrichtung insgesamt wenig Platz oder wenig Volumen beansprucht oder verbraucht wird.

Gemäß einer weiteren besonders vorteilhaften Ausführungsform der Vorrichtung kann vorgesehen sein, dass ein Werkstückerkennungssystem, insbesondere innerhalb des Gehäuses, realisiert ist, welches in der Lage ist direkt oder indirekt zumindest die Maße eines Werkstücks und/oder das Material eines Werkstücks, welches sich bevorzugt in einem Werkstückhalter der Werkstückhandhabungseinheit befindet, zu bestimmen. Vorteilhaft kann vorgesehen sein, dass das Werkstückerkennungssystem mit dem Steuerungssystem der Vorrichtung so verknüpft oder datentechnisch verbunden ist, dass Informationen über ein erkanntes, identifiziertes oder bestimmtes Werkstück an das Steuerungssystem übermittelt oder übergeben werden können.

Bei einer direkten Erkennung oder Bestimmung der Werkstückabmessungen und/oder des Werkstückmaterials können beispielsweise optische Systeme, beispielsweise 3D-Lasersysteme zum Einsatz kommen. Diese sind in der Lage die Abmessungen eines Werkstücks zuverlässig und genau direkt zu bestimmen oder zu vermessen. Hinsichtlich der Bestimmung des Materials können ggf. auch optische direkte Messverfahren zum Einsatz kommen. Aber auch andere physikalische Eigenschaften der jeweiligen Materialien können zu deren Erkennung in bekannter Weise herangezogen werden.

Alternativ kann eine mittelbare Erkennung stattfinden. Dies bedeutet, dass dem Werkstück mit den jeweiligen Abmessungen und dem entsprechenden Material ein Identifizierungsmittel zugeordnet und bevorzugt am Werkstück angebracht wird, welches dann von dem Werkstückerkennungssystem ausgelesen oder erkannt wird und dadurch indirekt auf das jeweilige Werkstück zurückgeschlossen wird. Auch hier können optische Erkennungssysteme auf der Grundlage von beispielsweise Lasergravierungen, Barcode-Aufklebern, QR-Code-Aufklebern od. dgl. zum Einsatz kommen. Weiterhin können auch anderweitige Identifikationsmittel, wie beispielsweise RFID-Tags, NFC-Tags oder sonstige elektronische auslesbare Identifizierungsmittel mit entsprechenden Erkennungssystemen zum Einsatz kommen.

Das oben genannte Problem wird auch durch ein System umfassend eine Vorrichtung gemäß einer der vorangehend beschriebenen Ausführungsformen und eine Werkzeugmaschine mit einem Bearbeitungswerkzeug, insbesondere einem Fräs- und/oder Drehbearbeitungswerkzeug und einem Maschinenschraubstock gelöst.

Das System ist dann, insbesondere in einem gekoppelten Zustand zwischen der Vorrichtung und der Werkstückmaschine, insbesondere dem Maschinenschraubstock der Werkzeugmaschine in der Lage nicht nur die tatsächliche Bearbeitung des Werkstücks in der Werkzeugmaschine sondern auch das Zuführen von Werkstücken und das Entnehmen von Werkstücken einschließlich dem Sichern oder Einspannen von Werkstücken im Maschinenschraubstock automatisch oder automatisiert durchzuführen. Da das System jedoch eine reversible Kupplung der Vorrichtung, insbesondere Kupplungseinheit an die Werkzeugmaschine erlaubt oder ermöglicht, die im Wesentlichen durch die Verschiebung oder Bewegung der Positioniereinrichtung bewerkstelligt oder mitverursacht wird, eignet sich das System, abhängig vom Kupplungszustand der Vorrichtung, gerade auch für eine zeitweise manuelle Bedienung, Beladung, Entladung und Spannung des Maschinenschraubstocks. Folglich ist das System in vorteilhafter Weise flexibel eingerichtet, um sowohl die automatische als auch die manuelle Bedienung des Maschinenschraubstocks sowie Beladung und Entladung des Maschinenschraubstocks zu ermöglichen.

Vorteilhaft kann vorgesehen sein, dass das System zusätzlich über ein Werkstücklager verfügt, welches bevorzugt an der Vorrichtung, insbesondere an einem Gehäuse der Vorrichtung angeordnet oder angebracht sein kann. Alternativ kann das System in einer vorteilhaften Weiterbildung auch eine Werkstückzuführeinrichtung, beispielsweise in Form eines Förderbandes od. dgl. umfassen, insbesondere um eine langfristige automatische Bedienung, Beladung und Entladung des Maschinenschraubstocks möglich zu machen, die von der Größe oder dem Volumen eines integrierten oder externen Werkstücklagers unabhängig ist.

Gemäß einer weiteren vorteilhaften Ausgestaltung des Systems kann vorgesehen sein, dass die Werkzeugmaschine über eine vertikal verschließbare Zugangsöffnung verfügt, die so dimensioniert ist, dass im geöffneten Zustand die Werkstückhandhabungseinheit zumindest teilweise in die Werkzeugmaschine hineinragen kann. Damit wird einerseits ermöglicht, dass die Werkzeugmaschine sicher bedient werden kann. Andererseits wird ermöglicht, dass ein ausreichender Zugang zur Werkzeugmaschine, gerade bei gekoppelter Kupplungseinheit, sichergestellt wird.

Nachfolgend wird ein Verfahren beschrieben welches den Betrieb einer Vorrichtung wie oben beschrieben oder eines Systems, wie vorangehend beschrieben, betrifft.

In Verfahrensschritten, die optional dem Verfahren vorgeschaltet sein können, kann die Anordnung oder Verbringung der Vorrichtung in einen Bereich, bevorzugt vor, einer Werkzeugmaschine sowie die Fixierung, und Ausrichtung der Vorrichtung gegenüber der Werkzeugmaschine erfolgen. Dabei kann ein Rollensystem des Gehäuses sowie eine Nullpunktfixierungseinrichtung zum Einsatz kommen. In anschließenden, ebenfalls optionalen Verfahrensschritten kann dann die Verschiebung oder Bewegung der Positioniereinrichtung, bevorzugt aus einem Gehäuse heraus, erfolgen. Diese kann vorteilhaft solange andauern oder fortgesetzt werden, bis zwischen einem Kupplungsstück der Kupplungseinheit und einer Antriebsspindel oder einem Antriebszapfen des Maschinenschraubstocks eine Kupplung erreicht wurde, bevorzugt unter Bewegung oder Einfederung eines gefederten Ausgleichssystems der Kupplungseinheit.

Sofern oder sobald die Kupplung zwischen der Kupplungseinheit und dem Maschinenschraubstock hergestellt ist, kann die erfindungsgemäße automatische Beladung, Entladung und Bedienung des Maschinenschraubstocks durch die Vorrichtung erfolgen. Dabei ist besonders vorteilhaft, dass im Rahmen des Kupplungsverfahrens oder des Kupplungsprozesses, wie vorangehend beschrieben, die Werkstückhandhabungseinheit mit der Positioniereinrichtung und zusammen mit der Kupplungseinheit bereits auf die Werkzeugmaschine und den Maschinenschraubstock zubewegt wurde und dabei ggf. aus dem Gehäuse teilweise oder ganz herausgeführt wurde. In einem Verfahrensschritt kann zunächst die Auswahl eines Werkstücks, beispielsweise über eine Position in einem internen oder externen Werkstücklager erfolgen.

Im Anschluss oder parallel, ggf. auch vorangehend, kann die Vorrichtung zudem Informationen bezüglich des Werkstücks und womöglich bezüglich der gekoppelten Werkzeugmaschine erhalten.

Mit diesen Informationen kann in einem weiteren Verfahrensschritt von der Kupplungseinheit der Maschinenschraubstock über das Kupplungsstück bereits geöffnet, vorpositioniert und/oder auf einen Referenzpunkt gefahren werden.

Weiterhin kann in einem Verfahrensschritt das Werkstück von einem Werkstückhalter der Werkstückhandhabungseinheit gegriffen oder aufgenommen werden und mittels entsprechender Steuersignale in Richtung des Maschinenschraubstocks bewegt und dort in einer Vorposition oberhalb des Maschinenschraubstocks oder bei einem bereits entsprechend geöffneten Maschinenschraubstock zwischen den Spannbacken des Maschinenschraubstocks angeordnet werden.

In einem weiteren optionalen Verfahrensschritt kann dann ein Vorspannen des Werkstücks innerhalb des Maschinenschraubstocks erfolgen, in dem das Kupplungsstück eine dafür notwendige Öffnung und/oder Schließung des Maschinenschraubstocks vornimmt.

In einem weiteren Verfahrensschritt kann dann die Einspannung des Werkstücks im Maschinenschraubstock erfolgen. Dabei wird in vorteilhafter Weise das Spann- oder Klemmmoment direkt oder indirekt überwacht. Beispielsweise kann über die Stromaufnahme und/oder Spannungsaufnahme des Motors oder Antriebsmotors zum Antrieb des Kupplungsstücks auf die Klemmwirkung des Maschinenschraubstocks auf das Werkstück geschlossen werden. Auch andere Mittel zur Überwachung oder Erkennung eines Klemm- oder Spannzustandes sind möglich. Bei der Einspannung des Werkstücks kann in einem vorteilhaften Verfahrensschritt vorgesehen sein, dass die Werkstückhandhabungseinheit eine Kraft auf das Werkstück aufbringt, die vertikal nach unten gerichtet ist und dafür sorgt, dass das Werkstück plan oder eben in dem Maschinenschraubstock anliegt und in einem entsprechend gewünschten Zustand der Ausrichtung eingespannt wird.

In einem nachfolgenden Verfahrensschritt wird das eingespannte Werkstück vom Werkstückhalter der Werkstückhandhabungseinheit getrennt oder gelöst und die Werkstückhandhabungseinheit fährt in eine Zwischenposition zurück oder bereitet alternativ bereits die Aufnahme des kommenden Werkstück vor, in dem ein weiteres Werkstück, beispielsweise in einem Werkstücklager mit dem Werkstückhalter angefahren wird.

In weiteren optionalen Verfahrensschritten kann, nach der Beendigung eines automatisierten Betriebs der Werkzeugmaschine ggf. vorgesehen sein, dass die Kupplungseinheit über ein Verfahren der Positioniereinrichtung zusammen mit der Werkstückhandhabungseinheit wieder von der Werkzeugmaschine gelöst und von dieser entfernt wird. Bevorzugt erfolgt dies solange oder soweit, bis die Positioniereinrichtung, die Kupplungseinheit und die Werkzeughandhabungsmaschine vollständig oder zumindest teilweise in einem Gehäuse der Vorrichtung angeordnet sind. In diesem Zustand der Vorrichtung ist dann entweder nach einer Entfernung der Vorrichtung, alternativ ggf. jedoch sogar bei unveränderter Position der Vorrichtung eine manuelle Bedienung und ein manueller Betrieb der Werkstückmaschine möglich, indem der Maschinenschraubstock manuell vom Bedienpersonal beladen, entladen und das Werkstück eingespannt wird.

Nachfolgend wird die erfindungsgemäße Vorrichtung, das erfindungsgemäße System sowie das Verfahren anhand von lediglich schematischen und beispielhaften Zeichnungen erläutert. Darin zeigen:
- Fig. 1a:: eine erfindungsgemäße Vorrichtung und ein erfindungsgemäßes System in einem ersten, ungekoppelten Zustand;
- Fig. 1b:: eine erfindungsgemäße Vorrichtung und ein erfindungsgemäßes System in einem zweiten ungekoppelten Zustand;
- Fig. 1c:: eine erfindungsgemäße Vorrichtung und ein erfindungsgemäßes System in einem dritten, gekoppelten Zustand; und
- Fig. 2:: eine perspektivische Darstellung eines Teils der erfindungsgemäßen Vorrichtung sowie eines Teils des erfindungsgemäßen Systems in einem ungekoppelten Zustand.

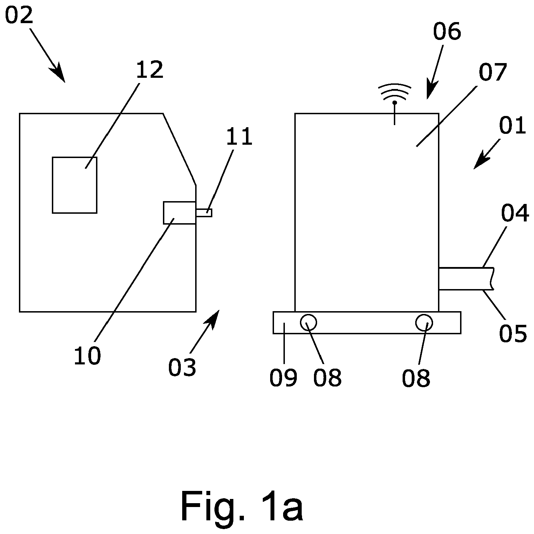

Die Fig. 1a zeigt eine Vorrichtung 01, die zusammen mit einer Werkzeugmaschine 02 ein System 03 bildet. Die Vorrichtung 01 ist im Zustand der Fig. 1a nicht mit der Werkzeugmaschine 02 gekoppelt. Stattdessen ist die Vorrichtung 01 in einem eingefahrenen Zustand gezeigt, in dem mit Ausnahme einer elektrischen Zuleitung 04 und einer Druckluftzuleitung 05 alle Bestandteile der Vorrichtung einschließlich der beispielhaft dargestellten Kommunikationsschnittstelle 06 im Inneren der Vorrichtung oder im Inneren des Gehäuses 07 der Vorrichtung 01 angeordnet sind. Das Gehäuse 07 verfügt weiter über ein Rollensystem 08, welches mit einem Nullpunktfixierungssystem 09 zusammenwirkt.

Die Werkzeugmaschine 02 umfasst einen Maschinenschraubstock 10 mit einem Antriebszapfen oder einem Ende einer Antriebsspindel 11, die benutzt oder betätigt werden kann, um den Maschinenschraubstock 10 zu öffnen, zu schließen, zu spannen und/oder entspannen.

Die Werkzeugmaschine 02 kann ferner ein Bearbeitungswerkzeug 12, beispielsweise eine Fräs- und/oder Drehbearbeitungswerkzeug, aufweisen, wobei der Maschinenschraubstock 10 dazu dient Werkstücke so zu lagern und zu fixieren, dass eine Bearbeitung mit dem Bearbeitungswerkzeug 12 möglich ist.

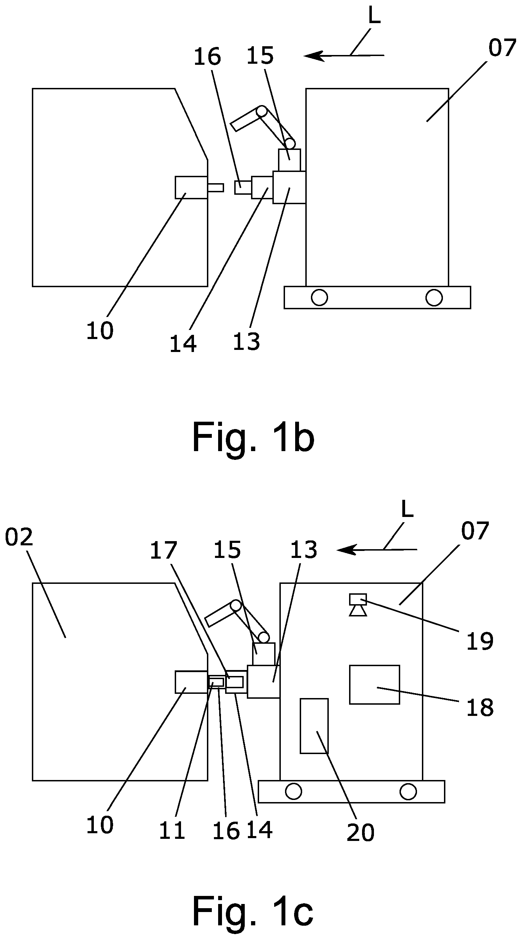

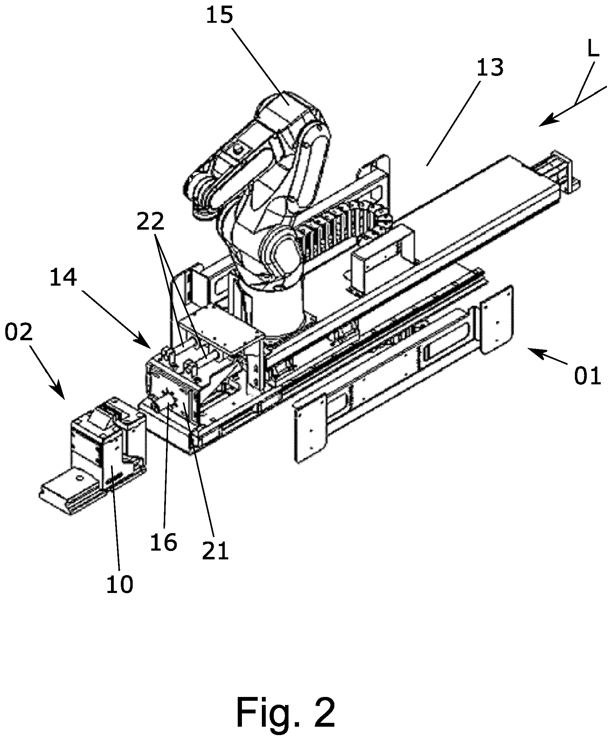

In dem Zustand der Vorrichtung 01 und des Systems 03 gemäß Fig. 1b ist eine in einer Längsrichtung L bewegliche Positioniereinrichtung 13, welche beweglich in der Vorrichtung 01, insbesondere im Gehäuse 07, gelagert ist, aus dem Gehäuse 07 teilweise herausbewegt worden. Mit der Positioniereinrichtung 13 verbunden oder von der Positioniereinrichtung 13 getragen wird dabei eine Kupplungseinheit 14 sowie eine Werkstückhandhabungseinheit 15. Die Werkstückhandhabungseinheit 15 kann beispielsweise als Mehrachsrobotereinheit, bevorzugt als Sechsachsroboter ausgeführt sein. Die Kupplungseinheit 14 kann, wie mit Bezug zu Fig. 2 noch detaillierter dargestellt und beschrieben wird, ein gefedertes Ausgleichssystem sowie ein Kupplungsstück 16 aufweisen, wobei letzteres rotatorisch von einem Antriebsmotor angetrieben wird.

In der Darstellung der Fig. 1c ist die Positioniereinrichtung 13, beispielsweise angetrieben durch einen nicht dargestellten Hydraulik- oder Pneumatikzylinder soweit aus dem Gehäuse 07 in Längsrichtung L herausbewegt worden, dass die Kupplungseinheit 14 an dem Maschinenschraubstock 10 anliegt und ferner die Antriebsspindel 11 von einem Kupplungsstück 16 der Kupplungseinheit 14 umgriffen und damit gekuppelt ist. Das Kupplungsstück 16 ist wiederum von einem, bevorzugt elektrischen Antriebsmotor 17 antreibbar. Wie anhand der Fig. 1c erkennbar ist, ist durch das weitere Herausbewegen der Positioniereinrichtung 13 aus der Vorrichtung 01 oder aus dem Gehäuse 07 der Vorrichtung 01 die Werkstückhandhabungseinheit 15 zusammen mit der Positioniereinrichtung 13 noch weiter auf die Werkzeugmaschine 02 und den Maschinenschraubstock 10 zubewegt worden. In dem in der Fig. 1 dargestellten Kupplungszustand des Systems 03 oder der Vorrichtung 01 mit der Werkzeugmaschine 02 kann über das rotatorisch angetriebene Kupplungsstück 16 die Antriebsspindel 11 des Maschinenschraubstocks 10 angetrieben und damit der Maschinenschraubstock 10 geöffnet, geschlossen und/oder vorgespannt und/oder gespannt werden. Weiterhin ist es zusätzlich möglich, dass mit der Werkstückhandhabungseinheit 15 ein Werkstück aus einem Werkstücklager 18, welches ebenfalls innerhalb des Gehäuses 07 angeordnet sein kein, entnommen werden und dem Maschinenschraubstock 10 zugeführt werden. Nach dem Erreichen des Maschinenschraubstocks 10 kann dieser über die Kupplungseinheit 14, insbesondere über das Kupplungsstück 16 betätigt, also beispielsweise geschlossen werden, um eine Einspannung sowie ggf. zuvor eine Vorspannung zu erreichen. Vorteilhaft kann vorgesehen sein, dass ein Werkstückhalter der Werkstückhandhabungseinheit 15 das Werkstück während der Herstellung der Spannung oder während dem Einspannen und dem dazugehörigen Antreiben des Kupplungsstücks 16, und dadurch verursacht das Antreiben der Maschinenschraubstockspindel, das Werkstück vertikal nach unten in den Maschinenschraubstock 10 gepresst oder kraftbeaufschlagt wird, um eine bündige Auflage oder Anlage des Werkstücks auf und in dem Maschinenschraubstock 10 sicherzustellen. Die Vorrichtung 01 kann zudem ein Werkstückerkennungssystem 19 umfassen, welches eine beispielsweise optische direkte oder indirekte Erkennung eines Werkstücks ermöglicht. Weiterhin kann vorgesehen sein, dass sowohl die Werkstückhandhabungseinheit 15 als auch die Kupplungseinheit 16 sowie ggf. die Positioniereinrichtung 13 von einem gemeinsamen, bevorzugt ebenfalls in der Vorrichtung 01, insbesondere im Gehäuse 07 angeordneten Steuerungssystem 20 gesteuert werden.

Die Fig. 2 zeigt eine perspektivische Darstellung eines Teils des erfindungsgemäßen Systems aufweisend eine Werkzeugmaschine 02 und eine erfindungsgemäße Vorrichtung 01. Aus Gründen der Übersichtlichkeit sind Bestandteile und Komponenten der Werkezugmaschine 02 sowie der Vorrichtung 01 in der Ansicht der Fig. 2 nicht dargestellt. Beispielsweise ist für die Werkzeugmaschine 02 im Wesentlichen der Maschinenschraubstock 10 dargestellt. Das Ende der Antriebsspindel 11 ist hingegen in der perspektivischen Darstellung der Fig. 2 nicht zu erkennen.

Aufseiten der Vorrichtung 01 ist beispielsweise das Gehäuse 07 ausgeblendet. Die Darstellung der Fig. 2 konzentriert sich im Wesentlichen auf die Positioniereinrichtung 13, die Kupplungseinheit 14, die Werkstückhandhabungseinheit 15 sowie die Details der Kupplungseinheit 14. Wie in der Fig. 2 deutlich zu erkennen ist, ist sowohl die Kupplungseinheit 14 als auch die Werkstückhandhabungseinheit 15 zusammen mit der Positioniereinrichtung 13 in Längsrichtung L bewegbar, um eine Annäherung und eine Entfernung zur Werkstückmaschine 02 oder zum Maschinenschraubstock 10 erreichen oder bewirken zu können. Bei einer ausreichenden Annährung der Kupplungseinheit 14 an den Maschinenschraubstock 10 kann ein über die Federeinrichtungen 22 gefedertes Ausgleichssystem 21 ebenfalls in Längsrichtung L oder entgegen der Längsrichtung L gegenüber der Positioniereinrichtung 13 verschoben werden. Je nach Zustand des Ausgleichssystems 21 kann das Kupplungsstück 16 der Kupplungseinheit 14 mit der Antriebsspindel 11 des Maschinenschraubstocks 10 gekuppelt werden, sodass eine von einem nicht im Detail in der Fig. 2 dargestellten Antriebsmotor des Kupplungsstücks 16 verursachte Rotation des Kupplungsstücks 16 auf die Antriebswelle des Maschinenschraubstocks 10 übertragen werden kann. Somit kann der Maschinenschraubstock 10 geöffnet und geschlossen werden, je nach Drehrichtung des Kupplungsstücks 16 oder des Antriebsmotors 17 des Kupplungsstücks 16. Weiterhin kann der Maschinenschraubstock 10 in einem gekuppelten Zustand gemäß Fig. 1c auch vorgespannt oder gespannt werden, wobei der Spannzustand oder Klemmzustand über wenigstens eine Sensoreinrichtung oder ein Sensor erfasst werden kann. Beispielsweise können Stromaufnahme und/oder die Spannungsaufnahme des Antriebsmotors 17_des Kupplungsstücks 16 verwendet werden, um den Klemmzustand oder Spannzustand der Spannbacken des Maschinenschraubstocks 10 zu beurteilen oder zu messen.

Wie aus der Fig. 2 ebenfalls hervorgeht, wird die Werkstückhandhabungseinheit 15 zusammen mit der Positioniereinrichtung 13 auf die Werkzeugmaschine 02 oder den Maschinenschraubstock 10 im Rahmen des Kupplungsvorgangs zubewegt und entsprechend im Rahmen der Entkupplung wegbewegt. Dies hat den Vorteil, dass die Werkstückhandhabungseinheit 15 im gekuppelten Zustand verhältnismäßig nah an dem Maschinenschraubstock 10 angeordnet ist. Dies führt wiederum dazu, dass die Werkstückhandhabungseinheit 15 zum Beladen und Entladen des Maschinenschraubstocks 10 nur verhältnismäßig kleine Distanzen überbrücken oder überwinden muss, sodass eine insgesamt kleine und kompakte Werkstückhandhabungseinheit 15 zum Einsatz kommen kann.

Anhand der Fig. 2 ist auch erkennbar, insbesondere zusammen mit der Darstellung der Fig. 1c, dass im gekoppelten Zustand eine automatische oder automatisierte Bestückung der Werkzeugmaschine 02 erfolgen kann, bei der mit der Werkstückhandhabungseinheit 15 ein Werkstück, beispielsweise aus einem Werkstücklager 18 entnommen und dem Maschinenschraubstock 10 zugeführt wird, wobei gleichzeitig oder nachfolgend über die Kupplungseinheit 14, insbesondere das Kupplungsstück 16 eine Bedienung des Maschinenschraubstocks 10 stattfindet, die die Aufnahme des Werkstücks und das Spannen des Werkstücks, ggf. unter Durchführung eines Vorspannschritts ermöglicht. Gleichermaßen ermöglicht die Werkstückhandhabungseinheit 15, dass das Werkstück während des Spannvorgangs so in den Maschinenschraubstock 10 eingepresst oder kraftbeaufschlagt wird, dass eine bündige oder plane Anlage des Werkstücks an den Oberflächen des Maschinenschraubstocks 10 sichergestellt wird. Nach dem Lösen des Werkstücks von einem Werkstückhalter der Werkstückhandhabungseinheit 15 und einer entsprechenden Entfernung der Werkstückhandhabungseinheit 15 aus der Werkzeugmaschine 02 kann, beispielsweise nach einem Verschließen einer Öffnung der Werkzeugmaschine 02, kann eine automatische Bearbeitung des Werkstücks durchgeführt werden, nach deren Abschluss die Werkstückhandhabungseinheit 15 wieder zum Einsatz kommen kann, um analog zum Vorgang des Beladens des Maschinenschraubstocks 10 in Zusammenwirken mit der Kupplungseinheit 14, insbesondere dem Kupplungsstück 16 die Entnahme des bearbeiteten Werkstücks automatisch durchzuführen.

Folglich kann in besonders vorteilhafter Weise für eine Vielzahl von bestehenden und standardisierten Werkzeugmaschinen 02 unter Ergänzung durch die erfindungsgemäße Vorrichtung 01 ein ebenfalls erfindungsgemäßes System 03 ausgebildet werden, welches eine zeitweise automatische Beschickung oder Bestückung der Werkzeugmaschinen 02 einschließlich einer automatischen Einspannung der Werkstücke ermöglicht. Der besondere Vorteil besteht dabei darin, dass über eine erneute Entkupplung der Vorrichtung 01 von der Werkzeugmaschine 02, im Wesentlichen durch ein erneutes Verfahren oder Bewegen der Positioniereinrichtung 13 in Längsrichtung L oder entgegen der Längsrichtung L weiterhin ohne Umrüstung der Werkzeugmaschine 02 auch eine manuelle Bedienung oder ein manuelles Beschicken oder Bestücken der Werkzeugmaschine 02 durchgeführt werden kann. Dadurch wird ein äußerst flexibles System bereitgestellt.

### Bezugszeichenliste

- 01: Vorrichtung
- 02: Werkzeugmaschine
- 03: System
- 04: Zuleitung
- 05: Druckluftzuleitung
- 06: Kommunikationsschnittstelle
- 07: Gehäuse
- 08: Rollensystem
- 09: Nullpunktfixierungssystem
- 10: Maschinenschraubstock
- 11: Antriebsspindel
- 12: Bearbeitungswerkzeug
- 13: Positioniereinrichtung
- 14: Kupplungseinheit
- 15: Werkstückhandhabungseinheit
- 16: Kupplungsstück
- 17: Antriebsmotor
- 18: Werkstücklager
- 19: Werkstückerkennungssystem
- 20: Steuerungssystem
- 21: Ausgleichssystem
- 22: Federeinrichtungen

- L: Längsrichtung

## Patentansprüche

1. Vorrichtung zum Be- und Entladen sowie zum Bedienen eines Maschinenschraubstocks (10) einer Werkzeugmaschine (02) umfassend eine entlang einer Längsrichtung (L) verschiebbar gelagerte Positioniereinrichtung (13), wobei in Längsrichtung (L) an einem Ende der Positioniereinrichtung (13) eine zusammen mit der Positioniereinrichtung (13) bewegbare Kupplungseinheit (14) zur lösbaren mechanischen Kupplung mit einem Maschinenschraubstock (10) der Werkzeugmaschine (02) und zur Bedienung, insbesondere Öffnen und Schließen des Maschinenschraubstocks (10), angeordnet ist und wobei in Längsrichtung (L) hinter der Kupplungseinheit (14) eine Werkstückhandhabungseinheit (15), insbesondere eine Mehrachsrobotereinheit zusammen mit der Positioniereinrichtung (13) bewegbar an dieser angeordnet ist.

2. Vorrichtung nach Anspruch 1,
**dadurch gekennzeichnet,**
**dass** die Kupplungseinheit (14) ein in Längsrichtung (L) gegenüber der Positioniereinrichtung (13) bewegliches, bevorzugt gefedertes, Ausgleichssystem (21) und ein mit einem Antriebsmotor (17) rotatorisch angetriebenes zusammen mit der Positioniereinrichtung (13) bewegliches Kupplungsstück (16) zur Kupplung mit einem Antriebszapfen oder einer Antriebsspindel (11) des Maschinenschraubstocks (10) aufweist.

3. Vorrichtung nach Anspruch 1 oder 2,
**dadurch gekennzeichnet,**
**dass** die Werkstückhandhabungseinheit (15) so ausgebildet und angeordnet ist, dass bei einer erfolgten Kupplung der Kupplungseinheit (14) an einen Maschinenschraubstock (10) ein Werkstückhalter der Werkstückhandhabungseinheit (15) den Maschinenschraubstock (10) erreichen kann.

4. Vorrichtung nach einem der Ansprüche 1 bis 3
**gekennzeichnet durch**
ein gemeinsames Steuerungssystem (20) für eine Werkstückhandhabungseinheit (15) und die Kupplungseinheit (14), und bevorzugt für die Positioniereinrichtung (13).

5. Vorrichtung nach Anspruch 4
**dadurch gekennzeichnet,**
**dass** das Steuerungssystem (20) mittels zumindest eines Sensors der Kupplungseinheit (14), insbesondere des Antriebsmotors (17) des Kupplungsstücks (16) und/oder des Ausgleichssystems (21), den Kopplungszustand und den Zustand des Maschinenschraubstocks (10) erfassen kann.

6. Vorrichtung nach Anspruch 4 oder 5,
**dadurch gekennzeichnet,**
**dass** das Steuerungssystem (20) dazu eingerichtet ist ein Werkstück mittels der Werkstückhandhabungseinheit (15) an einen gekoppelten Maschinenschraubstock (10) zu übergeben und zu entnehmen und ferner dazu eingerichtet ist den Maschinenschraubstock (10) zu öffnen, zu schließen und beim Schließen eine gewünschte, werkstückabhängige Einspannung des Werkstücks herzustellen.

7. Vorrichtung nach einem der Ansprüche 1 bis 6,
**gekennzeichnet durch**
ein gemeinsames Gehäuse (07), welches in einem eingefahrenen Zustand die Positioniereinrichtung (13) samt Kupplungseinheit (14) und Werkstückhandhabungseinheit (15) umschließt.

8. Vorrichtung nach Anspruch 7,
**dadurch gekennzeichnet,**
**dass** das Gehäuse (07) ein Werkstücklager (18) umfasst oder eine Kopplungseinrichtung für ein Werkstücklager (18) oder eine Werkstückzuführeinrichtung aufweist.

9. Vorrichtung nach Anspruch 7 oder 8,
**dadurch gekennzeichnet,**
**dass** das Gehäuse (07) bodenseitig ein Rollensystem (08) mit einer Nullpunktfixierungseinrichtung (09) aufweist.

10. Vorrichtung nach einem der Ansprüche 7 bis 9,
**dadurch gekennzeichnet,**
**dass** das Gehäuse (07) alle Betriebs- und Steuereinrichtungen aufnimmt, sodass zum Betrieb der Vorrichtung (01) nur eine Energieversorgung, beispielsweise eine elektrische Versorgung und/oder eine Druckluftversorgung, und bevorzugt eine Kommunikationsschnittstelle (06), bereitgestellt werden muss.

11. Vorrichtung nach einem der Ansprüche 7 bis 10,
**dadurch gekennzeichnet,**
**dass** das Gehäuse (07) eine Grundfläche zwischen 0,8m² und 1,5m², bevorzugt zwischen 1,0 m² und 1,2m², aufweist.

12. Vorrichtung nach einem der Ansprüche 1 bis 11,
**gekennzeichnet durch**
ein Werkstückerkennungssystem (19), welches in der Lage ist direkt oder indirekt zumindest die Maße eines Werkstücks, welches sich bevorzugt in einem Werkstückhalter der Werkstückhandhabungseinheit (15) befindet, zu bestimmen.

13. System (03) umfassend eine Vorrichtung (01) nach einem der Ansprüche 1 bis 12 und eine Werkzeugmaschine (02) mit einem Bearbeitungswerkzeug (12), insbesondere einem Fräs- und/oder Drehbearbeitungswerkzeug, und einem Maschinenschraubstock (10).

14. System nach Anspruch 13,
**dadurch gekennzeichnet,**
**dass** die Werkzeugmaschine (02) über eine vertikal verschließbare Zugangsöffnung verfügt, die so dimensioniert ist, dass im geöffneten Zustand die Werkstückhandhabungseinheit (15) zumindest teilweise in die Werkzeugmaschine (02) hineinragen kann.

## Claims

1. A device for loading and unloading as well as using a machine vice (10) of a machine tool (02), the device comprising a positioning apparatus (13) mounted so as to be displaceable along a longitudinal direction (L), a coupling unit (14) moveable in conjunction with the positioning apparatus (13) being disposed on one end of the positioning apparatus (13) in the longitudinal direction (L) for being detachably and mechanically coupled with a machine vice (10) of the machine tool (02) and for being used, in particular for opening and closing the machine vice (10), and a workpiece handling unit (15), in particular a multiaxial robot unit, being disposed on the positioning apparatus (13) in the longitudinal direction (L) behind the coupling unit (14) so as to be moveable with the positioning apparatus (13).

2. The device according to claim 1,
**characterized in that**
the coupling unit (14) has a compensation system (21) moveable, preferably spring-loaded, with respect to the positioning apparatus (13) in the longitudinal direction (L) and a coupling piece (16) which is rotationally driven by a drive motor (17), is moveable in conjunction with the positioning apparatus (13) and serves for being coupled with a drive pin or a drive screw (11) of the machine vice (10).

3. The device according to claim 1 or 2,
**characterized in that**
the workpiece handling unit (15) is designed and disposed such that a workpiece holder of the workpiece handling unit (15) can reach the machine vice (10) once the coupling unit (14) has been coupled with a machine vice (10).

4. The device according to any one of the claims 1 to 3,
**characterized by**
a shared control system (20) for a workpiece handling unit (15) and the coupling unit (14) and preferably for the positioning apparatus (13).

5. The device according to claim 4,
**characterized in that**
the control system (20) is capable of registering the coupling state and the state of the machine vice (10) by means of at least one sensor of the coupling unit (14), in particular by means of the drive motor (17) of the coupling piece (16) and/or the compensation system (21).

6. The device according to claim 4 or 5,
**characterized in that**
the control system (20) is configured to transfer a workpiece to a coupled machine vice (10) by means of the workpiece handling unit (15) and to remove it therefrom and is further configured to open and close the machine vice (10) and to establish a desired clamping of the workpiece as a function of the workpiece.

7. The device according to any one of the claims 1 to 6,
**characterized by**
a shared casing (07) which encloses the positioning apparatus (13) including the coupling unit (14) and the workpiece handling unit (15) when in a retracted state.

8. The device according to claim 7,
**characterized in that**
the casing (07) comprises a workpiece mount (18) or a coupling apparatus for a workpiece mount (18) or a workpiece supply apparatus.

9. The device according to claim 7 or 8,
**characterized in that**
the casing (07) has a roll system (08) disposed on its bottom, the roll system (08) having a zero-point-fixation apparatus (09).

10. The device according to any one of the claims 7 to 9,
**characterized in that**
the casing (07) receives all operating and control apparatuses, meaning only one power supply, e.g., an electric supply and/or a compressed-air supply, and preferably one communication interface (06) must be supplied for operating the device (01).

11. The device according to any one of the claims 7 to 10,
**characterized in that**
the casing (07) has a base surface between 0.8 m² and 1.5 m², preferably between 1.0 m² and 1.2 m².

12. The device according to any one of the claims 1 to 11,
**characterized by**
a workpiece identification system (19) which is capable of directly or indirectly determining at least the size of a workpiece preferably located in a workpiece holder of the workpiece handling unit (15).

13. A system (03) comprising a device (01) according to any one of the claims 1 to 12 and a tool machine (02) having a processing tool (12), in particular a milling and/or a lathing tool, and a machine vice (10).

14. The system according to claim 13,
**characterized in that**
the tool machine (02) disposes over a vertically closeable access opening whose size is such that the workpiece handling unit (15) is able to protrude at least partially in the tool machine (02) when in the open state.

## Revendications

1. Dispositif pour la charge et la décharge ainsi que l'usinage d'un étau de machine (10) d'une machine-outil (02), le dispositif comprenant un appareil de positionnement (13) monté de manière à être déplaçable le long un sens longitudinal (L), une unité d'accouplement (14) mobile conjointement avec l'appareil de positionnement (13) étant disposé en sens longitudinal (L) sur un extrémité de l'appareil de positionnement (13) pour un accouplement mécanique et détachable avec un étau de machine (10) de la machine-outil (02) et pour l'usinage, notamment pour ouvrir et fermer l'étau de machine (10), et une unité (15) pour la manutention d'une pièce à travailler, notamment une unité de robot multiaxial, étant disposée sur appareil de positionnement (13) en sens longitudinal (L) au derrière de l'unité d'accouplement (14) afin de pouvoir être bougée avec l'unité de positionnement (13).

2. Dispositif selon la revendication 1,
**caractérisé en ce que**
l'unité d'accouplement (14) a un système à compenser (21) mobile, de préférence à ressort, par rapport au appareil de positionnement (13) en sens longitudinal (L) et une pièce d'accouplement (16) qui est entraînée de manière rotative par un moteur d'entraînement (17), peut être bougée conjointement avec l'appareil de positionnement (13) et sert à l'accouplement avec une goupille de commande ou avec une bielle de commande (11) de l'étau de machine (10).

3. Dispositif selon la revendication 1 ou la revendication 2,
**caractérisé en ce que**
l'unité (15) pour la manutention d'une pièce à travailler est configurée et disposée de telle manière qu'un support de pièce à travailler de l'unité (15) pour la manutention d'une pièce à travailler peut atteindre l'étau de machine (10) une fois l'unité d'accouplement (14) a été couplée avec un étau de machine (10).

4. Dispositif selon l'une quelconque des revendications 1 à 3,
**caractérisé par**
un système de commande (20) commun pour une unité (15) pour la manutention d'une pièce à travailler et pour l'unité d'accouplement (14) et de préférence pour l'appareil de positionnement (13).

5. Dispositif selon la revendication 4,
**caractérisé en ce que**
le système de commande (20) peut enregistrer l'état d'accouplement et l'état de l'étau de machine (10) au moyen d'au moins un capteur de l'unité d'accouplement (14), notamment du moteur d'entraînement (17) de la pièce d'accouplement (16) et/ou du système à compenser (21).

6. Dispositif selon la revendication 4 ou la revendication 5,
**caractérisé en ce que**
le système de commande (20) est configuré à transférer une pièce à travailler à un étau de machine (10) couplé au moyen de l'unité (15) pour la manutention d'une pièce à travailler et à l'en enlever et est configuré en outre à ouvrir et à fermer l'étau de machine (10) et à établir un serrage désiré de la pièce à travailler en fonction de la pièce à travailler.

7. Dispositif selon l'une quelconque des revendications 1 à 6,
**caractérisé par**
un boîtier (07) commun qui encercle l'appareil de positionnement (13) incluant l'unité d'accouplement (14) et l'unité (15) pour la manutention d'une pièce à travailler dans l'état rétracté.

8. Dispositif selon la revendication 7,
**caractérisé en ce que**
le boîtier (07) comprend un support (18) de pièce à travailler ou un appareil d'accouplement pour un support (18) de pièce à travailler ou pour un appareil d'alimentation en pièce à travailler.

9. Dispositif selon la revendication 7 ou la revendication 8,
**caractérisé en ce que**
le boîtier (07) a un système de rouleau (08) disposé à son fond, the système de rouleau (08) ayant une fixation de zéro (09).

10. Dispositif selon l'une quelconque des revendications 7 à 9,
**caractérisé en ce que**
le boîtier (07) reçoit tous les appareils d'opération et de commande de manière à ce que seulement une fourniture d'énergie, par exemple une fourniture électrique et/ou une fourniture d'air comprimé, et de préférence une interface de communication (06) doit être provisionner pour l'opération du dispositif (01).

11. Dispositif selon l'une quelconque des revendications 7 à 10,
**caractérisé en ce que**
le boîtier (07) a une surface de base entre 0,8 m² et 1.5 m², de préférence entre 1,0 m² et 1,2 m².

12. Dispositif selon l'une quelconque des revendications 1 à 11,
**caractérisé par**
un système d'identification (19) d'une pièce à travailler qui peut déterminer directement ou indirectement au moins la taille d'une pièce à travailler de préférence située dans un support de pièce à travailler de l'unité (15) pour la manutention d'une pièce à travailler.

13. Système (03) comprenant un dispositif (01) selon l'une quelconque des revendications 1 à 12 et une machine-outil (02) ayant un outil d'usinage (12), notamment un fraiseur et/ou un tour, et un étau de machine (10).

14. Système selon la revendication 13,
**caractérisé en ce que**
la machine-outil (02) possède une ouverture d'entrée qui peut être fermée verticalement et dont taille est dimensionnée de manière à que l'unité (15) pour la manutention d'une pièce à travailler peut être fait saillie dans la machine-outil (02) au moins en partie dans l'état ouvert.
